# EUROPÄISCHE PATENTSCHRIFT

(11) **EP 4 147 943 B1**
(45) Veröffentlichungstag und Bekanntmachung des Hinweises auf die Patenterteilung: **28.10.2026**
(21) Anmeldenummer: 21196339.2
(22) Anmeldetag: 13.09.2021
(51) Int. Cl.: B61L 25/02

(54) **MESSANORDNUNG, FAHRZEUG UND VEFAHREN**
MEASURING ASSEMBLY, VEHICLE AND METHOD
AGENCEMENT DE MESURE, VÉHICULE ET PROCÉDÉ

(43) Veröffentlichungstag der Anmeldung: 15.03.2023
(73) Patentinhaber: Siemens Mobility GmbH, 80997 München (DE)
(72) Erfinder: Johannes, Lars, 38108 Braunschweig (DE)
(74) Vertreter: Siemens Patent Attorneys

(56) Entgegenhaltungen:
- WO-A1-2013/020739
- WO-A1-2015/189140
- DE-B4- 102005 046 456

## Beschreibung

Die Erfindung bezieht sich auf eine Messanordnung, die mit satellitenbasierten Messeinrichtungen ausgestattet sind. Satellitenbasierte Messeinrichtungen sind bekannterweise in der Lage, relativ genaue Messwerte bezüglich des Orts und der Geschwindigkeit, beispielsweise eines Fahrzeugs, zu liefern. Aus diesem Grund werden derartige Messeinrichtungen heutzutage auch im privaten Bereich, beispielsweise in Personenkraftwagen eingesetzt. Die im Handel erhältlichen satellitenbasierten Messeinrichtungen sind dabei üblicherweise in der Lage, sowohl einen Messwert, der einen Ort und/oder die Geschwindigkeit der Messeinrichtung angibt, als auch einen die Genauigkeit des jeweiligen Messwerts angebenden, messwertbezogenen Genauigkeitswert auszugeben.

Bei Einsatz in der Eisenbahntechnik besteht das Problem, dass mit Blick auf die hohen vorgeschriebenen Sicherheitsstandards zu jedem Zeitpunkt eine akkurate Kenntnis des jeweiligen Orts und der jeweiligen Geschwindigkeit der Schienenfahrzeuge gewährleistet werden soll. Problematisch ist in diesem Zusammenhang, dass die Satellitensignale, die von den satellitenbasierten Messeinrichtungen ausgewertet werden, von terrestrischen Angreifern durch sogenanntes Spoofing manipuliert werden können und die Messeinrichtungen in einem solchen Falle verfälschte Messwerte ausgeben. Eine solche Messwertverfälschung würde im Eisenbahnbereich fatale Folgen haben können, sodass sich die Aufgabe stellt, Messanordnungen, die auf satellitenbasierten Messeinrichtungen basieren, hinsichtlich eines sicheren Betriebs, gerade auch mit Blick auf die hohen Anforderungen im Eisenbahnbereich, besonders manipulationssicher zu gestalten.

Diese Aufgabe wird erfindungsgemäß durch eine Messanordnung mit den Merkmalen gemäß Patentanspruch 1 gelöst. Vorteilhafte Ausgestaltungen der erfindungsgemäßen Messanordnung sind in Unteransprüchen angegeben.

Danach ist erfindungsgemäß vorgesehen, dass zusätzlich zu einer ersten satellitenbasierten Messeinrichtung, die auf der Basis von Signalen eines ersten globalen Satellitenortungssystems arbeitet, zumindest eine zweite satellitenbasierte Messeinrichtung vorhanden ist, die auf der Basis von Signalen eines zweiten anderen globalen Satellitenortungssystems arbeitet, und die erste und zweite satellitenbasierte Messeinrichtung mit einer Auswerteinrichtung verbunden sind, die unter Heranziehung der Messwerte und/oder der messwertbezogenen Genauigkeitswerte der Messeinrichtungen eine Plausibilitätsprüfung durchführt und ein Fehlersignal erzeugt, wenn die Plausibilitätsprüfung ein unplausibles Ergebnis liefert und als gescheitert angesehen wird.

Das Dokument DE 102005046456 B4 betrifft ein Verfahren zur Bestimmung des Orts und/oder einer Bewegungsgröße von sich bewegenden Objekten, insbesondere von sich bewegenden spurgebundenen Fahrzeugen, wobei mindestens ein Vorverarbeitungsrechner vorgesehen ist. Mindestens drei Sensoren werden verwendet, um die Sensordaten zu ermitteln und an Prozesse von Vorverarbeitungsrechnern zu übergeben. Jeder Prozess berechnet einen Differenzfaktor aus den Sensordaten von je zwei Sensoren. Die Prozesse tauschen die Differenzfaktoren untereinander aus und die Sensorgüte für jeden Sensor wird ermittelt. Die Prozesse berechnen anhand der Sensordaten und der Sensorgüte jeweils den Ort und/oder die Bewegungsgröße, jeweils gewichtet mit der zugehörigen Sensorgüte.

Die erfindungsgemäße Messanordnung arbeitet in vorteilhafter Weise also nicht allein auf der Basis einer einzigen satellitenbasierten Messeinrichtung, sondern auf der Basis zumindest zweier satellitenbasierter Messeinrichtungen, die unterschiedliche globale Satellitenortungssysteme nutzen. Wird eine der Messeinrichtungen durch Fremdeinwirkung, beispielsweise durch das sogenannte Spoofing der Satellitensignale, gestört, so kann dies durch die erfindungsgemäße Plausibilitätsprüfung festgestellt werden. Wird ein Plausibilitätsproblem festgestellt, so wird das Fehlersignal erzeugt und es können vorgegebene Sicherheitsmaßnahmen ergriffen werden, die dem Umstand fehlender Plausibilität Rechnung tragen.

Der Abstand zwischen den Messeinrichtungen wird bei der Errechnung der Abweichungswerte erfindungsgemäß berücksichtigt, indem die Abweichungswerte unter Berücksichtigung der Abstände korrigiert werden.

Vorteilhaft ist es, wenn die Auswerteinrichtung dazu ausgebildet ist, einen Abweichungswert zu bilden, der die Abweichung zwischen den Messwerten untereinander oder die Abweichung von einem geschätzten Messwert (Schätzwert), der auf der Basis zumindest eines der Messwerte geschätzt worden ist, quantifiziert, einen die Genauigkeit des Abweichungswerts angebenden Genauigkeitswert, nachfolgend abweichungswertbezogener Genauigkeitswert genannt, zu bilden, und das Fehlersignal unter Heranziehung des Abweichungswerts und des abweichungswertbezogenen Genauigkeitswerts zu erzeugen.

Bei der letztgenannten Variante ist es besonders vorteilhaft, wenn die Auswerteinrichtung die Plausibilitätsprüfung als gescheitert ansieht und das Fehlersignal erzeugt, wenn der Betrag des Quotienten zwischen dem Abweichungswert und dem abweichungswertbezogenen Genauigkeitswert einen abweichungswertbezogenen Grenzwert erreicht oder überschreitet.

Alternativ oder zusätzlich kann die Auswerteinrichtung die Plausibilitätsprüfung als gescheitert ansehen und das Fehlersignal erzeugen, wenn der erste messwertbezogene Genauigkeitswert einen ersten messwertbezogenen Grenzwert, der zweite messwertbezogene Genauigkeitswert einen zweiten messwertbezogenen Grenzwert oder beide messwertbezogenen Genauigkeitswerte ihren jeweiligen messwertbezogenen Grenzwert erreichen oder überschreiten.

Vorzugsweise sind ein oder mehr weitere Messeinrichtungen vorhanden, die jeweils zum Erzeugen eines weiteren Messwerts, der den Ort bzw. die Geschwindigkeit der jeweiligen Messeinrichtung angibt, und eines weiteren messwertbezogenen Genauigkeitswerts, der die Genauigkeit des weiteren Messwerts angibt, dienen. Bei den weiteren Messeinrichtungen oder zumindest bei einer von diesen handelt es sich vorzugsweise um eine weitere satellitenbasierte Messeinrichtung.

Bei der letztgenannten Variante ist es von Vorteil, wenn die Auswerteinrichtung dazu ausgebildet ist,
- pro Paar an Messeinrichtungen jeweils einen paarindividuellen Abweichungswert zu bilden, der die Abweichung zwischen den Messwerten der Messeinrichtungen des jeweiligen Paares quantifiziert,
- pro Paar an Messeinrichtungen einen die Genauigkeit des paarindividuellen Abweichungswerts angebenden paarindividuellen Genauigkeitswert zu bilden, und
- das Fehlersignal unter Heranziehung der paarindividuellen Abweichungswerte und der paarindividuellen Genauigkeitswerte zu erzeugen.

Vorteilhaft ist es, wenn die Auswerteinrichtung die Plausibilitätsprüfung als gescheitert ansieht und das Fehlersignal erzeugt, wenn bei zumindest einem Paar der Betrag des Quotienten zwischen dem paarindividuellen Abweichungswert und dem paarindividuellen Genauigkeitswert einen paarindividuellen abweichungswertbezogenen Grenzwert oder einen systemübergreifenden abweichungswertbezogenen Grenzwert erreicht oder überschreitet.

Alternativ oder zusätzlich kann in vorteilhafter Weise vorgesehen sein, dass die Auswerteinrichtung dazu ausgebildet ist, einen Abweichungswert zu bilden, der die Abweichung der Messwerte der satellitenbasierten Messeinrichtungen von einem geschätzten Messwert (bzw. Schätzwert), der auf der Basis der Messwerte aller satellitenbasierter Messeinrichtungen der Messanordnung geschätzt worden ist, quantifiziert, einen die Genauigkeit des Abweichungswerts angebenden Genauigkeitswert, nachfolgend abweichungswertbezogener Genauigkeitswert genannt, zu bilden, und das Fehlersignal unter Heranziehung des Abweichungswerts und des abweichungswertbezogenen Genauigkeitswerts zu erzeugen.

Die Messeinrichtungen sind vorzugsweise mit derselben Antenne verbunden und nutzen diese gemeinsam; alternativ können einzelne oder alle Messeinrichtungen auch individuelle Antennen verwenden.

Mit Blick auf geringe Kosten wird es als vorteilhaft angesehen, wenn die Messanordnung eine Recheneinrichtung und einen Speicher aufweist. In dem Speicher ist vorzugsweise Software abgespeichert, die bei Ausführung durch die Recheneinrichtung die Arbeitsweise der Recheneinrichtung festlegt. Die Auswerteinrichtung und die Messeinrichtungen werden vorzugsweise durch Softwareprogrammmodule der Software gebildet.

Die Erfindung bezieht sich darüber hinaus auf ein Fahrzeug, insbesondere ein Schienenfahrzeug gemäß Patentanspruch 11. Erfindungsgemäß ist diesbezüglich vorgesehen, dass das Fahrzeug mit einer Messanordnung, wie sie durch einen der Patentansprüche 1 bis 10 definiert ist, ausgestattet ist.

Bezüglich der Vorteile des erfindungsgemäßen Fahrzeugs und vorteilhafter Ausgestaltungen des erfindungsgemäßen Fahrzeugs sei auf die obigen Ausführungen im Zusammenhang mit der erfindungsgemäßen Messanordnung und deren vorteilhafter Ausgestaltungen verwiesen.

Besonders vorteilhaft ist es, wenn das Fahrzeug ein Fahrzeugsteuergerät aufweist, das bei Vorliegen des Fehlersignals prüft, ob die Geschwindigkeit des Fahrzeugs reduziert werden muss oder das Fahrzeug angehalten werden muss, und/oder bei Vorliegen des Fehlersignals die Geschwindigkeit des Fahrzeugs sofort reduziert oder das Fahrzeug sofort anhält.

Die Erfindung bezieht sich darüber hinaus auf ein Verfahren gemäß Patentanspruch 14 zum Erzeugen eines ersten Messwertes, der einen Ort oder eine Geschwindigkeit angibt, und eines die Genauigkeit des ersten Messwerts angebenden messwertbezogenen ersten Genauigkeitswerts, mit Hilfe einer ersten satellitenbasierten Messeinrichtung, die auf der Basis von Signalen eines ersten globalen Satellitenortungssystems arbeitet.

Erfindungsgemäß ist bezüglich des Verfahrens vorgesehen, dass mit einer zweiten satellitenbasierten Messeinrichtung, die auf der Basis von Signalen eines zweiten, anderen globalen Satellitenortungssystems arbeitet, ein zweiter Messwert, der ebenfalls den Ort bzw. die Geschwindigkeit angibt, und ein zweiter messwertbezogener Genauigkeitswert, der die Genauigkeit des zweiten Messwerts angibt, erzeugt werden und eine Plausibilitätsprüfung durchgeführt wird und ein Fehlersignal erzeugt wird, wenn die Plausibilitätsprüfung ein unplausibles Ergebnis liefert und als gescheitert angesehen wird. Bezüglich der Vorteile des erfindungsgemäßen Verfahrens und vorteilhafter Ausgestaltungen des erfindungsgemäßen Verfahrens sei auf die obigen Ausführungen im Zusammenhang mit der erfindungsgemäßen Messanordnung und deren vorteilhafter Ausgestaltungen verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Messanordnung, die mit zwei satellitenbasierten Messeinrichtungen ausgestattet ist, wobei den Messeinrichtungen jeweils eine eigene Antenne zugeordnet ist,
- Figur 2: ein Ausführungsbeispiel für eine erfindungsgemäße Messanordnung, die mit zwei satellitenbasierten Messeinrichtungen ausgestattet ist, wobei die Messeinrichtungen jeweils an dieselbe Antenne **an**geschlossen sind,
- Figur 3: ein Ausführungsbeispiel für eine erfindungsgemäße Messanordnung, die mit mehreren satellitenbasierten Messeinrichtungen ausgestattet ist, wobei die Messeinrichtungen jeweils an eine eigene Antenne angeschlossen sind,
- Figur 4: ein Ausführungsbeispiel für eine erfindungsgemäße Messanordnung, die mit mehreren satellitenbasierten Messeinrichtungen ausgestattet ist, wobei die Messeinrichtungen jeweils an dieselbe Antenne **an**geschlossen sind, und
- Figur 5: ein Ausführungsbeispiel für ein erfindungsgemäßes Schienenfahrzeug, das mit einem Ausführungsbeispiel für eine erfindungsgemäße Messanordnung **aus**gestattet **ist.**

In den Figuren werden der Übersicht halber für identische oder vergleichbare Komponenten stets dieselben Bezugszeichen verwendet.

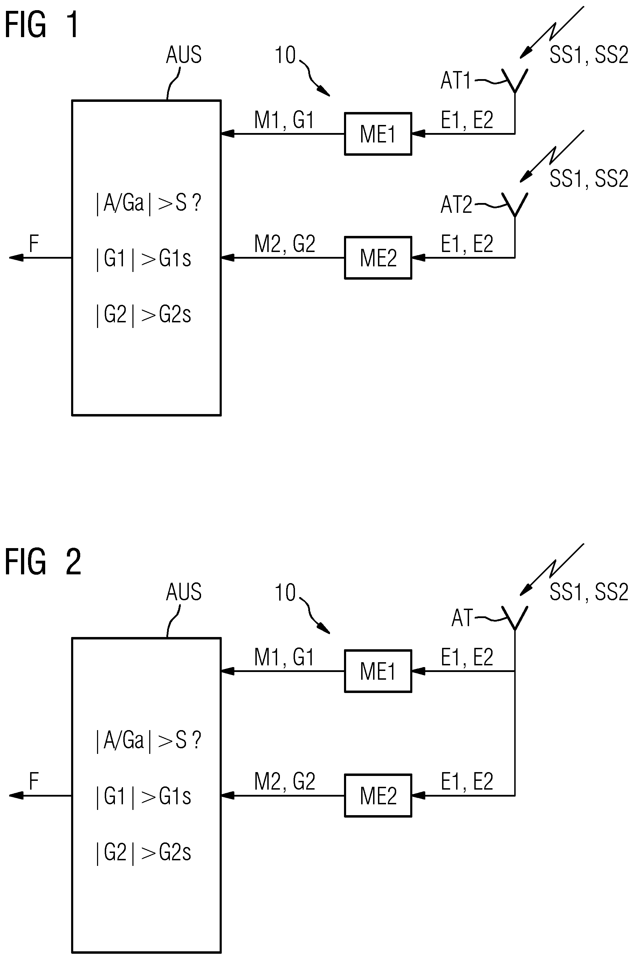

Die Figur 1 zeigt ein erstes Ausführungsbeispiel für eine Messanordnung 10, die mit einer ersten satellitenbasierten Messeinrichtung ME1 und einer zweiten satellitenbasierten Messeinrichtung ME2 ausgestattet ist. Die erste satellitenbasierte Messeinrichtung ME1 arbeitet auf der Basis von Signalen SS1 eines ersten globalen Satellitenortungssystems und die zweite satellitenbasierte Messeinrichtung ME2 auf der Basis von Signalen SS2 eines zweiten globalen Satellitenortungssystems. Die beiden Messeinrichtungen ME1 und ME2 sind mit individuell zugeordneten Antennen AT1 bzw. AT2 verbunden, die jeweils den Signalen SS1 und SS2 entsprechende Empfangssignale E1 und E2 zu ihren Messeinrichtungen ME1 bzw. ME2 übersenden.

Die erste satellitenbasierte Messeinrichtung ME1 kann beispielsweise auf der Basis des GPS-Satellitenortungssystems arbeiten und die zweite satellitenbasierte Messeinrichtung ME2 auf der Basis von Signalen des Galileo-Satellitenortungssystems.

Die erste satellitenbasierte Messeinrichtung ME1 wertet die Empfangssignale E1 ihrer Antenne AT1 aus und erzeugt einen ersten Messwert M1, der den Ort oder die Geschwindigkeit der Messeinrichtung ME1 angibt, und einen die Genauigkeit des ersten Messwerts ME1 angebenden messwertbezogenen ersten Genauigkeitswert G1.

Die zweite satellitenbasierte Messeinrichtung ME2 wertet die Empfangssignale E2 ihrer Antenne AT2 aus und erzeugt einen zweiten Messwert M2, der den Ort oder die Geschwindigkeit der zweiten Messeinrichtung ME2 angibt, und einen die Genauigkeit des zweiten Messwerts ME angebenden messwertbezogenen zweiten Genauigkeitswert G2.

Die Genauigkeitswerte G1 und G2 definieren für die Messwerte M1 und M2 jeweils Bereichsgrenzen, innerhalb derer sich der tatsächliche Ort bzw. die tatsächliche Geschwindigkeit mit einer vorgegebenen Wahrscheinlichkeit befinden werden; bei sehr genauen Messwerten sind die Genauigkeitswerte G1 und G2 somit kleiner als bei demgegenüber ungenaueren Messwerten, weil bei letztgenannten die Bereichsgrenzen weiter von den Messwerten entfernt liegen als bei genaueren Messwerten. Bei einem absolut genauen, also fehlerfreien Messwert würden die Genauigkeitswerte G1 und G2 also Null betragen; mit steigendem möglichem Messfehler steigen die Genauigkeitswerte G1 und G2 entsprechend an. Die Genauigkeitswerte könnten demgemäß auch als Fehlerbereichswerte oder als "Ungenauigkeitswerte" bezeichnet werden, weil sie mit ansteigendem Betrag eine ansteigende Ungenauigkeit beschreiben.

Handelsübliche satellitenbasierte Messeinrichtungen liefern Genauigkeitswerte der beschriebenen Art üblicherweise mit, sodass diesbezüglich auf die Fachliteratur verwiesen sei.

Da die beiden Messeinrichtungen ME1 und ME2 zu derselben Messanordnung 10 gehören und beispielsweise in demselben Fahrzeug installiert sind, sollten die Messwerte M1 und M2 zumindest näherungsweise ähnlich sein.

Den beiden Messeinrichtungen ME1 und ME2 nachgeordnet ist eine Auswerteinrichtung AUS, die unter Heranziehung der Messwerte M1 und M2 und der messwertbezogenen Genauigkeitswerte G1 und G2 der beiden Messeinrichtungen ME1 und ME2 eine Plausibilitätsprüfung durchführt.

Die Plausibilitätsprüfung umfasst vorzugsweise die Bildung eines Abweichungswerts A, der die Abweichung zwischen den Messwerten M1 und M2 quantifiziert, vorzugsweise gemäß: $A = \left|M1-M2\right|$

Bei den Messwerten M1 und M2 wird es sich in der Regel um vektorielle Messwerte M bzw. Messwertvektoren handeln, die den Ort oder die Geschwindigkeit für drei Raumkoordinaten, beispielsweise kartesische x-, y- und z-Koordinaten, angeben. Der Abweichungswert A wird dann vorzugsweise gebildet gemäß: $A = \sqrt[2]{{\left(Mx1-Mx2\right)}^{2} + {\left(My1-My2\right)}^{2} + {\left(Mz1-Mz2\right)}^{2}}$ wobei Mx1, My1, und Mz1 die x-, y- und z-Koordinatenanteile des vektoriellen Messwerts M1 und Mx2, My2, und Mz2 die x-, y- und z-Koordinatenanteile des vektoriellen Messwerts M2 bezeichnen.

Für den Abweichungswert A wird ein die Genauigkeit des Abweichungswerts A angebender Genauigkeitswert Ga, nachfolgend abweichungswertbezogener Genauigkeitswert Ga genannt, ermittelt.

Der abweichungswertbezogene Genauigkeitswert Ga definiert für den Abweichungswert A jeweils eine Bereichsgrenze bzw. einen Bereich, innerhalb derer sich der tatsächliche Abweichungswert A mit einer vorgegebenen Wahrscheinlichkeit befinden wird; bei einem sehr genauen Abweichungswert ist der abweichungswertbezogene Genauigkeitswert Ga somit kleiner als bei einem demgegenüber ungenaueren Genauigkeitswert, weil bei letztgenanntem die Bereichsgrenzen weiter von dem Abweichungswert A entfernt liegen als bei einem genaueren Abweichungswert. Bei einem absolut genauen, also fehlerfreien Abweichungswert A würde der Genauigkeitswert Ga also Null betragen; mit ansteigendem möglichem Fehler des Abweichungswerts A bzw. bei ansteigender Ungenauigkeit steigt der Genauigkeitswert Ga entsprechend an.

Mit dem abweichungswertbezogenen Genauigkeitswert Ga kann dann ein Quotient Q gebildet und dieser Quotient Q einem Schwellenwertvergleich unterworfen werden, vorzugsweise gemäß: $Q = \left|A/Ga\right| > S ⇒ F$

Überschreitet der Quotient Q einen vorgegebenen Schwellenwert S, so werden die Messergebnisse als unplausibel eingestuft und es wird ein Fehlersignal F erzeugt, das das Scheitern des Plausibilitätstests anzeigt. Der Quotient Q wird den Schwellenwert überschreiten, wenn der Abweichungswert zwischen den Messwerten M1 und M2 bei betragsmäßig kleinem abweichungswertbezogenen Genauigkeitswert Ga (also bei hoher Genauigkeit bzw. hoher Verlässlichkeit des Abweichungswerts) unplausibel groß ist.

Der abweichungswertbezogene Genauigkeitswert Ga kann als Funktion der messwertbezogenen Genauigkeitswerte G1 und G2 oder durch eine Schätzung auf der Basis der messwertbezogenen Genauigkeitswerte G1 und G2 ermittelt werden. Möglich ist auch nur eine Mittelwertbildung der messwertbezogenen Genauigkeitswerte G1 und G2 beispielsweise gemäß: $Ga = G 1 - \left(G1-G2\right) / 2$

Alternativ oder zusätzlich kann die Auswerteinrichtung AUS die Plausibilitätsprüfung als gescheitert ansehen und das Fehlersignal F erzeugen, wenn der erste messwertbezogene Genauigkeitswert G1 einen ersten messwertbezogenen Genauigkeitsgrenzwert G1s, der zweite messwertbezogene Genauigkeitswert G2 einen zweiten messwertbezogenen Genauigkeitsgrenzwert G2s oder beide messwertbezogenen Genauigkeitswerte G1 und G2 ihre jeweiligen messwertbezogenen Genauigkeitsgrenzwerte erreichen oder überschreiten, beispielsweise gemäß: $G 1 > G 1 s ⇒ F$ $G 2 > G 2 s ⇒ F$

Alternativ kann die Auswerteinrichtung AUS den Abweichungswert A mittels eines Schätzverfahrens SV schätzen, vorzugsweise zumindest auch auf der Basis der Messwerte M1 und M2 der Messeinrichtungen ME1 und ME2, beispielsweise gemäß: $A = SV \left(M1; M2\right)$

In das Schätzverfahren SV können auch weitere Parameter und/oder andere Messergebnisse anderer Quellen einfließen. Auch können die eingehenden Messwerte, Parameter oder anderen Messergebnisse gewichtet berücksichtigt werden, wenn deren Qualität oder Aussagekraft unterschiedlich zu bewerten ist.

Das Schätzverfahren SV kann beispielsweise auf einem Prädiktionsverfahren beruhen und beispielsweise Kalmanfilter nutzen.

Für den geschätzten Abweichungswert wird die Auswerteinrichtung AUS vorzugsweise mittels eines weiteren Schätzverfahrens SV2 den abweichungswertbezogenen Genauigkeitswert Ga schätzen, beispielsweise gemäß: $Ga = SV 2 \left(G1; G2\right)$

In das weitere Schätzverfahren SV2 können auch weitere Parameter und/oder andere Messergebnisse anderer Quellen einfließen. Das weitere Schätzverfahren SV2 kann beispielsweise auf einem Prädiktionsverfahren beruhen und beispielsweise Kalmanfilter nutzen.

Die Figur 2 zeigt als zweites Ausführungsbeispiel eine Ausführungsvariante des ersten Ausführungsbeispiels gemäß Figur **1****.** Im Unterschied zu dem Ausführungsbeispiel gemäß Figur 1 sind die zwei satellitenbasierten Messeinrichtungen ME1 und ME2 an dieselbe Antenne AT angeschlossen und werten die Empfangssignale derselben Antenne AT aus.

Im Übrigen gelten die obigen Ausführungen im Zusammenhang mit der Figur 1 bei dem zweiten Ausführungsbeispiel gemäß Figur 1 entsprechend.

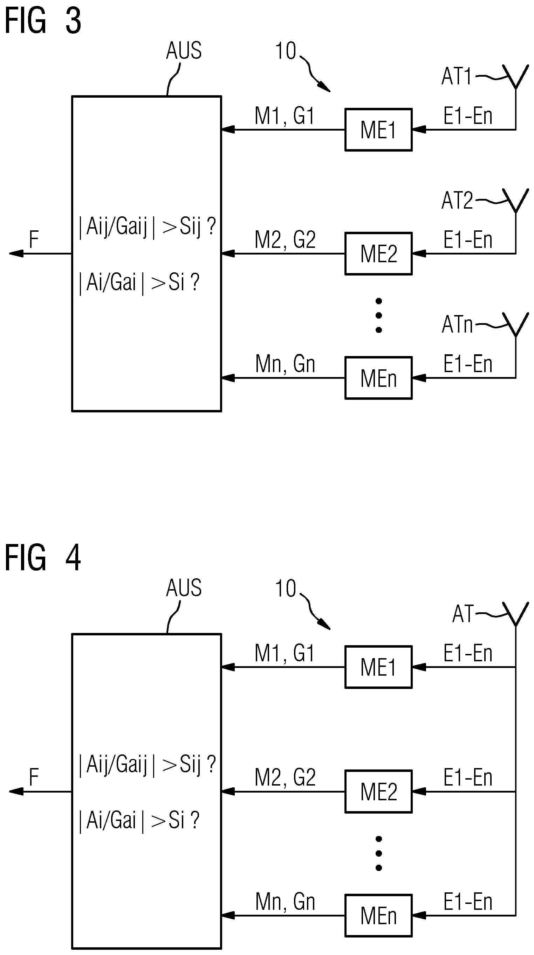

Die Figur 3 zeigt ein drittes Ausführungsbeispiel für eine Messanordnung 10, die mit drei oder mehr satellitenbasierten Messeinrichtungen ME1 bis MEn (n>2) ausgestattet ist. Die satellitenbasierten Messeinrichtungen ME1 bis MEn arbeiten jeweils auf der Basis von Signalen eines zugeordneten globalen Satellitenortungssystems und werten hierzu die entsprechenden Empfangssignale E1-En aus.

Den Messeinrichtungen ME1 bis MEn nachgeordnet ist eine Auswerteinrichtung AUS, die unter Heranziehung der Messwerte M1 bis Mn und der messwertbezogenen Genauigkeitswerte G1 bis Gn der Messeinrichtungen ME1 bis MEn eine paarbezogene Plausibilitätsprüfung durchführt.

Konkret ist die Auswerteinrichtung AUS vorzugsweise dazu ausgebildet, pro Paar an Messeinrichtungen Mi/Mj (i≠j) jeweils einen paarindividuellen Abweichungswert Aij zu bilden, der die Abweichung zwischen den Messwerten Mi und Mj der Messeinrichtungen des jeweiligen Paares quantifiziert: $Aij = \left|Mi-Mj\right|$ mit i,j=1...n und i≠j

Darüber hinaus bildet die Auswerteinrichtung AUS pro Paar an Messeinrichtungen einen die Genauigkeit des paarindividuellen Abweichungswerts Aij angebenden paarindividuellen Genauigkeitswert Gaij. Die paarindividuellen Genauigkeitswerte Gaij können beispielsweise genauso gebildet werden, wie dies im Zusammenhang mit Figur 1 für den abweichungswertbezogenen Genauigkeitswert Ga für die beiden Messeinrichtungen ME1 und ME2 erläutert wurde.

Mit dem paarweisen Abweichungswert Aij und dem paarindividuellen Genauigkeitswert Gaij kann dann ein paarindividueller Quotient Qij gebildet und dieser Quotient Qij einem Schwellenwertvergleich unterworfen werden, vorzugsweise gemäß: $Qij = \left|Aij/Gaij\right| > Sij ⇒ F$

Überschreitet der Quotient Qij einen vorgegebenen, beispielsweise paarindividuellen Schwellenwert Sij, so werden die Messergebnisse Mi und Mj als unplausibel eingestuft und es wird ein Fehlersignal F erzeugt, das das Scheitern des Plausibilitätstests anzeigt.

Alternativ oder zusätzlich kann die Auswerteinrichtung AUS pro i-ter Messeinrichtung MEi einen Abweichungswert Ai bilden, der die Abweichung der Messwerte Mi der jeweiligen i-ten Messeinrichtung MEi von einem geschätzten systembezogenen Messwert Msys, der vorzugsweise auf der Basis der Messwerte M1-Mn aller satellitenbasierten Messeinrichtungen ME1 bis MEn der Messanordnung 10 geschätzt worden ist, quantifiziert.

Die Schätzung des systembezogenen Messwerts Msys erfolgt beispielsweise mittels eines Schätzverfahrens SV3, beispielsweise gemäß: $Msys = SV 3 \left(M1;…; Mn\right)$ mit i=1...n

In das Schätzverfahren SV3 können auch weitere Parameter und/oder andere Messergebnisse anderer Quellen einfließen. Auch können die einbezogenen Messwerte M1 bis Mn, Parameter oder anderen Messergebnisse gewichtet berücksichtigt werden, wenn deren Qualität oder Aussagekraft unterschiedlich zu bewerten ist.

Das Schätzverfahren SV3 kann beispielsweise auf einem Prädiktionsverfahren beruhen und beispielsweise Kalmanfilter nutzen.

Die Abweichungswerte Ai werden vorzugsweise wie folgt berechnet: $Ai = \left|Mi-Msys\right|$

Außerdem wird die Auswerteinrichtung AUS für jeden der Abweichungswerte Ai einen die Genauigkeit des jeweiligen Abweichungswerts Ai angebenden Genauigkeitswert Gai, nachfolgend abweichungswertbezogener Genauigkeitswert Gai genannt, bilden.

Der abweichungswertbezogene Genauigkeitswert Gai kann mittels einer Schätzverfahrens SV4 geschätzt werden, vorzugsweise zumindest auch auf der Basis des Genauigkeitswerte Gi der Messeinrichtungen ME1 bis MEn, beispielsweise gemäß: $Gai = SV 4 \left(Ai, G1,…,Gn\right)$ mit i=1...n

In das Schätzverfahren SV4 können auch weitere Parameter und/oder andere Messergebnisse anderer Quellen einfließen. Auch können die berücksichtigten Genauigkeitswerte G1 bis Gn, Parameter oder anderen Messergebnisse gewichtet eingehen, wenn deren Qualität oder Aussagekraft unterschiedlich zu bewerten ist.

Das Schätzverfahren SV4 kann beispielsweise auf einem Prädiktionsverfahren beruhen und beispielsweise Kalmanfilter nutzen.

Mit den Abweichungswerten Ai und dem abweichungswertbezogenen Genauigkeitswert Gai kann dann jeweils ein Quotient Qi gebildet und dieser Quotient Qi einem Schwellenwertvergleich unterworfen werden, vorzugsweise gemäß: $Qi = \left|Ai/Gai\right| > Si ⇒ F$

Überschreitet der Quotient Qi einen vorgegebenen, beispielsweise messeinrichtungsbezogenen Schwellenwert Si, so werden die Messergebnisse als unplausibel eingestuft und es wird ein Fehlersignal F erzeugt, das das Scheitern des Plausibilitätstests anzeigt.

Die Figur 4 zeigt als viertes Ausführungsbeispiel eine Ausführungsvariante des dritten Ausführungsbeispiel gemäß Figur **3****.** Im Unterschied zu dem Ausführungsbeispiel gemäß Figur 3 sind die satellitenbasierten Messeinrichtungen ME1 bis MEn an dieselbe Antenne AT angeschlossen und werten die Empfangssignale derselben Antenne AT aus.

Im Übrigen gelten die obigen Ausführungen im Zusammenhang mit der Figur 3 bei dem vierten Ausführungsbeispiel gemäß Figur 4 entsprechend.

Bei den Ausführungsbeispielen gemäß den Figuren 3 und 4 sind drei oder mehr satellitenbasierte Messeinrichtungen vorhanden; alternativ können auch nur zwei Messeinrichtungen (z. B. ME1 und ME2) satellitenbasiert sein und die weiteren Messeinrichtungen (ME3-MEn) können auf anderen bekannten Messmechanismen (z. B. Wegstreckenzähler usw.) basieren. Die obigen Ausführungen im Zusammenhang mit einer abweichungs- und genauigkeitsbezogenen Plausibilitätsprüfung bei drei oder mehr satellitenbasierten Messeinrichtungen gelten für solche Ausführungen mit zwei satellitenbasierten Messeinrichtungen und weiteren anders arbeitenden Messeinrichtungen entsprechend.

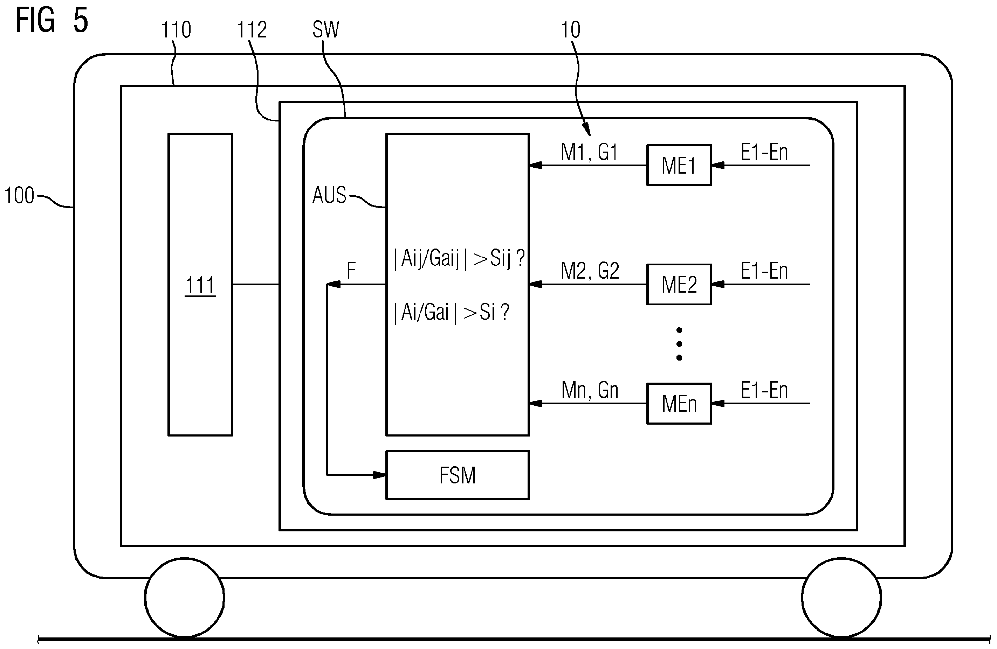

Die Figur 5 zeigt als fünftes Ausführungsbeispiel ein Schienenfahrzeug 100, das mit einer Messanordnung 10 ausgestattet ist, beispielsweise einer solchen, wie sie oben im Zusammenhang mit den Figuren 1 bis 4 beschrieben worden ist.

Die Messanordnung 10 ist in ein Fahrzeugsteuergerät 110 des Schienenfahrzeugs 100 integriert und dient zum Messen des Orts und/oder der Geschwindigkeit des Schienenfahrzeugs 100 auf der Basis von Signalen zumindest zweier globaler Satellitenortungssysteme.

Das Fahrzeugsteuergerät 110 und damit auch die Messanordnung 10 werden durch eine Recheneinrichtung 111 und einen Speicher 112 gebildet, in dem Software SW abgespeichert ist. Die Software legt bei Ausführung durch die Recheneinrichtung 111 die Arbeitsweise der Recheneinrichtung 111 und damit der Messanordnung 10 bzw. des Fahrzeugsteuergeräts 110 insgesamt fest. Die Auswerteinrichtung AUS und die Messeinrichtungen ME-MEn, die im Zusammenhang mit den Figuren 1 bis 4 beschrieben worden sind, werden bei dem Ausführungsbeispiel gemäß Figur 5 durch Softwareprogrammmodule der Software SW gebildet.

Das Fahrzeugsteuergerät 110 bzw. die Recheneinrichtung 11 prüft die Plausibilität der Messwerte M1-Mn und erzeugt ein Fehlersignal F im Falle fehlender Plausibilität. Bei Vorliegen des Fehlersignals F wird von einem ebenfalls in der Software implementierten Fahrzeugsteuermodul FSM vorzugsweise auch geprüft, ob die Geschwindigkeit des Fahrzeugs reduziert oder das Fahrzeug sogar angehalten werden muss.

Obwohl die Erfindung im Detail durch bevorzugte Ausführungsbeispiele näher illustriert und beschrieben wurde, so ist die Erfindung nicht durch die offenbarten Beispiele eingeschränkt.

Der Schutzumfang der Erfindung ist ausschließlich durch die Merkmale der unabhängigen Ansprüche definiert

### Bezugszeichen

- 10: Messanordnung
- 100: Schienenfahrzeug
- 110: Fahrzeugsteuergerät
- 111: Recheneinrichtung
- 112: Speicher

- A: Abweichungswert
- AT: Antenne
- AUS: Auswerteinrichtung
- E: Empfangssignal
- F: Fehlersignal
- FSM: Fahrzeugsteuermodul
- G: Genauigkeitswert
- Ga: abweichungswertbezogene Genauigkeitswert
- G1s: messwertbezogener Genauigkeitsgrenzwert
- G2s: messwertbezogener Genauigkeitsgrenzwert
- i: Zählvariable
- j: Zählvariable
- M: Messwert
- ME: Messeinrichtung
- Msys: systembezogener Messwert
- n: Zählvariable
- S: Schwellenwert
- SS: Satellitensignal
- SV: Schätzverfahren
- SW: Software

## Patentansprüche

1. Messanordnung (10) mit einer ersten satellitenbasierten Messeinrichtung (ME1), die auf der Basis von Signalen (SS1) eines ersten globalen Satellitenortungssystems arbeitet, zum Erzeugen
- eines ersten Messwertes (M1), der einen Ort oder eine Geschwindigkeit der ersten Messeinrichtung (ME1) angibt, und
- eines die Genauigkeit des ersten Messwerts (M1) angebenden messwertbezogenen ersten Genauigkeitswerts (G1),
wobei
- zumindest eine zweite Messeinrichtung (ME2) vorhanden ist, die dient zum Erzeugen
- eines zweiten Messwerts (M2), der den Ort bzw. die Geschwindigkeit der zweiten Messeinrichtung (ME2) angibt, und
- eines zweiten messwertbezogenen Genauigkeitswerts (G2), der die Genauigkeit des zweiten Messwerts (M2) angibt, und
- die erste und zweite satellitenbasierte Messeinrichtung (ME1-ME2) mit einer Auswerteinrichtung (AUS) verbunden sind, die unter Heranziehung der Messwerte (M1-Mn) und/oder der messwertbezogenen Genauigkeitswerte (G1-Gn) der Messeinrichtungen (ME1-MEn) eine Plausibilitätsprüfung durchführt und ein Fehlersignal (F) erzeugt, wenn die Plausibilitätsprüfung ein unplausibles Ergebnis liefert und als gescheitert angesehen wird,
**dadurch gekennzeichnet, dass**
- die zumindest eine zweite Messeinrichtung (ME2) satellitenbasiert ist und auf der Basis von Signalen (SS2) eines zweiten anderen globalen Satellitenortungssystems arbeitet,
- der Abstand zwischen den Messeinrichtungen (ME1-MEn) bei der Errechnung der Abweichungswerte (A) berücksichtigt wird, indem die Abweichungswerte (A) unter Berücksichtigung der Abstände korrigiert werden.

2. Messanordnung (10) nach Anspruch 1,
**dadurch gekennzeichnet, dass**
die Auswerteinrichtung (AUS) dazu ausgebildet ist,
- einen Abweichungswert (A) zu bilden, der die Abweichung zwischen den Messwerten (M1-Mn) untereinander oder die Abweichung von einem geschätzten Messwert (Msys), der auf der Basis zumindest eines der Messwerte geschätzt worden ist, quantifiziert,
- einen die Genauigkeit des Abweichungswerts (A) angebenden Genauigkeitswert (Ga), nachfolgend abweichungswertbezogener Genauigkeitswert (Ga) genannt, zu bilden, und
- das Fehlersignal (F) unter Heranziehung des Abweichungswerts (A) und des abweichungswertbezogenen Genauigkeitswerts (Ga) zu erzeugen.

3. Messanordnung (10) nach Anspruch 2,
**dadurch gekennzeichnet, dass**
die Auswerteinrichtung (AUS) die Plausibilitätsprüfung als gescheitert ansieht und das Fehlersignal (F) erzeugt, wenn der Betrag des Quotienten zwischen dem Abweichungswert (A) und dem abweichungswertbezogenen Genauigkeitswert (Ga) einen abweichungswertbezogenen Grenzwert (S) erreicht oder überschreitet.

4. Messanordnung (10) nach einem der voranstehenden Ansprüche,
**dadurch gekennzeichnet, dass**
die Auswerteinrichtung (AUS) die Plausibilitätsprüfung als gescheitert ansieht und das Fehlersignal (F) erzeugt, wenn der erste messwertbezogene Genauigkeitswert (G1) einen ersten messwertbezogenen Grenzwert (G1s), der zweite messwertbezogene Genauigkeitswert (G2) einen zweiten messwertbezogenen Grenzwert (G2s) oder beide messwertbezogenen Genauigkeitswerte (G1-G2) ihren jeweiligen messwertbezogenen Grenzwert erreichen oder überschreiten.

5. Messanordnung (10) nach einem der voranstehenden Ansprüche,
**dadurch gekennzeichnet, dass**
ein oder mehr weitere Messeinrichtungen (ME3-MEn) vorhanden sind, die jeweils dienen zum Erzeugen
- eines weiteren Messwerts (M3-Mn), der den Ort bzw. die Geschwindigkeit der jeweiligen Messeinrichtung (ME3-MEn) angibt, und
- eines weiteren messwertbezogenen Genauigkeitswerts (G3-Gn), der die Genauigkeit des weiteren Messwerts (M3-Mn) angibt.

6. Messanordnung (10) nach Anspruch 5,
**dadurch gekennzeichnet, dass**
- die Auswerteinrichtung (AUS) dazu ausgebildet ist, pro Paar an Messeinrichtungen (MEi, MEj) jeweils einen paarindividuellen Abweichungswert (Aij) zu bilden, der die Abweichung zwischen den Messwerten (Mi, Mj) der Messeinrichtungen (Mei, MEj) des jeweiligen Paares quantifiziert,
- die Auswerteinrichtung (AUS) dazu ausgebildet ist, pro Paar an Messeinrichtungen (MEi, MEj) einen die Genauigkeit des paarindividuellen Abweichungswerts (Aij) angebenden paarindividuellen Genauigkeitswert (Gaij) zu bilden, und
- die Auswerteinrichtung (AUS) dazu ausgebildet ist, das Fehlersignal (F) unter Heranziehung der paarindividuellen Abweichungswerte (Aij) und der paarindividuellen Genauigkeitswerte (Gaij) zu erzeugen.

7. Messanordnung (10) nach Anspruch 6,
**dadurch gekennzeichnet, dass**
die Auswerteinrichtung (AUS) die Plausibilitätsprüfung als gescheitert ansieht und das Fehlersignal (F) erzeugt, wenn bei zumindest einem Paar der Betrag des Quotienten zwischen dem paarindividuellen Abweichungswert (Aij) und dem paarindividuellen Genauigkeitswert (Gaij) einen paarindividuellen abweichungswertbezogenen Grenzwert (Sij)oder einen systemübergreifenden abweichungswertbezogenen Grenzwert erreicht oder überschreitet.

8. Messanordnung (10) nach einem der voranstehenden Ansprüche 5 bis 7,
**dadurch gekennzeichnet, dass**
die Auswerteinrichtung (AUS) dazu ausgebildet ist,
- einen Abweichungswert (Ai) zu bilden, der die Abweichung der Messwerte der Messeinrichtungen (ME1-MEn) von einem geschätzten Messwert (Msys), der auf der Basis der Messwerte der Messeinrichtungen (ME1-MEn) der Messanordnung (10) geschätzt worden ist, quantifiziert,
- einen die Genauigkeit des Abweichungswerts (Ai) angebenden Genauigkeitswert (Gai), nachfolgend abweichungswertbezogener Genauigkeitswert (Gai) genannt, zu bilden, und
- das Fehlersignal (F) unter Heranziehung des Abweichungswerts (Ai) und des abweichungswertbezogenen Genauigkeitswerts (Gai) zu erzeugen.

9. Messanordnung (10) nach einem der voranstehenden Ansprüche,
**dadurch gekennzeichnet, dass**
die Messeinrichtungen (ME1-MEn) mit derselben Antenne (AT) verbunden sind diese gemeinsam nutzen oder
einzelne oder alle Messeinrichtungen (ME1-MEn) jeweils mit einer individuell zugeordneten Antenne (AT1-ATn) verbunden sind und die Antennensignale der jeweils individuell zugeordneten Antenne nutzen.

10. Messanordnung (10) nach einem der voranstehenden Ansprüche,
**dadurch gekennzeichnet, dass**
- die Messanordnung (10) eine Recheneinrichtung (111) und einen Speicher (112) aufweist, in dem Software (SW) abgespeichert ist, die bei Ausführung durch die Recheneinrichtung (111) die Arbeitsweise der Recheneinrichtung (111) festlegt und
- die Auswerteinrichtung (AUS) und die Messeinrichtungen (ME1-MEn) durch Softwareprogrammmodule der Software (SW) gebildet werden.

11. Fahrzeug, insbesondere Schienenfahrzeug (100),
**dadurch gekennzeichnet, dass**
das Fahrzeug mit einer Messanordnung (10) nach einem der voranstehenden Ansprüche ausgestattet ist.

12. Fahrzeug nach Anspruch 11,
**dadurch gekennzeichnet, dass**
das Fahrzeug ein Fahrzeugsteuergerät (110) aufweist, das bei Vorliegen des Fehlersignals (F) prüft, ob die Geschwindigkeit des Fahrzeugs reduziert werden muss oder das Fahrzeug angehalten werden muss.

13. Fahrzeug nach Anspruch 11 oder 12,
**dadurch gekennzeichnet, dass**
das Fahrzeug ein Fahrzeugsteuergerät (110) aufweist, das bei Vorliegen des Fehlersignals (F) die Geschwindigkeit des Fahrzeugs reduziert oder das Fahrzeug anhält.

14. Verfahren zum Erzeugen eines ersten Messwertes (M1), der einen Ort oder eine Geschwindigkeit angibt, und eines die Genauigkeit des ersten Messwerts (M1) angebenden messwertbezogenen ersten Genauigkeitswerts (G1), mit Hilfe einer ersten satellitenbasierten Messeinrichtung (ME1), die auf der Basis von Signalen (SS1) eines ersten globalen Satellitenortungssystems arbeitet,
wobei
- zumindest mit einer zweiten Messeinrichtung (ME2) ein zweiter Messwert (M2), der ebenfalls den Ort bzw. die Geschwindigkeit angibt, und
- ein zweiter messwertbezogener Genauigkeitswert (G2), der die Genauigkeit des zweiten Messwerts (M2) angibt, erzeugt werden und
- eine Plausibilitätsprüfung durchgeführt wird und ein Fehlersignal (F) erzeugt wird, wenn die Plausibilitätsprüfung ein unplausibles Ergebnis liefert und als gescheitert angesehen wird,
**dadurch gekennzeichnet, dass**
- die zumindest eine zweite Messeinrichtung (ME2) satellitenbasiert ist und auf der Basis von Signalen (SS2) eines zweiten anderen globalen Satellitenortungssystems arbeitet,
- der Abstand zwischen den Messeinrichtungen (ME1-MEn) bei der Errechnung der Abweichungswerte (A) berücksichtigt wird, indem die Abweichungswerte (A) unter Berücksichtigung der Abstände korrigiert werden.

## Claims

1. Measurement arrangement (10) with a first satellite-based measurement facility (ME1), which works on the basis of signals (SS1) of a first global satellite positioning system, for generating
- a first measured value (M1), which indicates a location or a speed of the first measurement facility (ME1), and
- a measured value-based first accuracy value (G1) indicating the accuracy of the first measured value (M1),
wherein
- at least one second measurement facility (ME2) is present, which serves for generating
- a second measured value (M2), which indicates the location or the speed of the second measurement facility (ME2), and
- a second measured value-based accuracy value (G2), which indicates the accuracy of the second measured value (M2), and
- the first and second satellite-based measurement facilities (ME1-ME2) are connected to an evaluation facility (AUS), which carries out a plausibility check using the measured values (M1-Mn) and/or the measured value-based accuracy values (G1-Gn) of the measurement facilities (ME1-MEn) and generates an error signal (F) if the plausibility check delivers an implausible result and is regarded as failed,
**characterised in that**
- the at least one second measurement facility (ME2) is satellite-based and works on the basis of signals of a second, different global satellite positioning system,
- the distance between the measurement facilities (ME1-MEn) is taken into account when calculating the deviation values (A) **in that** the deviation values (A) are corrected by taking into account the distances.

2. Measurement arrangement (10) according to claim 1, **characterised in that**
the evaluation facility (AUS) is designed
- to form a deviation value (A), which quantifies the deviation between the measured values (M1-Mn) among themselves or the deviation from an estimated measured value (Msys), which has been estimated on the basis of at least one of the measured values,
- to form an accuracy value (Ga) indicating the accuracy of the deviation value (A), hereinafter referred to as the deviation value-based accuracy value (Ga), and
- to generate the error signal (F) using the deviation value (A) and the deviation value-based accuracy value (Ga).

3. Measurement arrangement (10) according to claim 2, **characterised in that**
the evaluation facility (AUS) regards the plausibility check as failed and generates the error signal (F) if the amount of the quotient between the deviation value (A) and the deviation value-based accuracy value (Ga) attains or overshoots a deviation value-based limit value (S).

4. Measurement arrangement (10) according to one of the preceding claims,
**characterised in that**
the evaluation facility (AUS) regards the plausibility check as failed and generates the error signal (F) if the first measured value-based accuracy value (G1) attains or overshoots a first measured value-based limit value (G1s), the second measured value-based accuracy value (G2) attains or overshoots a second measured value-based limit value (G2s) or both measured value-based accuracy values (G1-G2) attain or overshoot their respective measured value-based limit value.

5. Measurement arrangement (10) according to one of the preceding claims,
**characterised in that**
one or more further measurement facilities (ME3-MEn) are present, which in each case serve for generating
- a further measured value (M3-Mn), which indicates the location or the speed of the respective measurement facility (ME3-MEn), and
- a further measured value-based accuracy value (G3-Gn), which indicates the accuracy of the further measured value (M3-Mn).

6. Measurement arrangement (10) according to claim 5, **characterised in that**
- the evaluation facility (AUS) is designed to form per pair of measurement facilities (MEi, MEj) in each case one deviation value (Aij) individual to the pair, which quantifies the deviation between the measured values (Mi, Mj) of the measurement facilities (Mei, MEj) of the respective pair,
- the evaluation facility (AUS) is designed to form pro pair of measurement facilities (MEi, MEj) an accuracy value (Gaij), individual to the pair, indicating the accuracy of the deviation value (Aij) individual to the pair, and
- the evaluation facility (AUS) is designed to generate the error signal (F) using the deviation values (Aij) individual to the pair and the accuracy values (Gaij) individual to the pair.

7. Measurement arrangement (10) according to claim 6, **characterised in that**
the evaluation facility (AUS) regards the plausibility check as failed and generates the error signal (F) if in the case of at least one pair the amount of the quotient between the deviation value (Aij) individual to the pair and the accuracy value (Gaij) individual to the pair attains or overshoots a deviation value-based limit value (Sij) individual to the pair or a system-wide deviation value-based limit value.

8. Measurement arrangement (10) according to one of the preceding claims 5 to 7,
**characterised in that**
the evaluation facility (AUS) is designed
- to form a deviation value (Ai), which quantifies the deviation of the measured values of the measurement facilities (ME1-MEn) from an estimated measured value (Msys), which has been estimated on the basis of the measured values of the measurement facilities (ME1-MEn) of the measurement arrangement (10),
- to form an accuracy value (Gai) indicating the accuracy of the deviation values (Ai), hereinafter referred to as the deviation value-based accuracy value (Gai), and
- to generate the error signal (F) using the deviation values (Ai) and the deviation value-based accuracy value (Gai).

9. Measurement arrangement (10) according to one of the preceding claims,
**characterised in that**
the measurement facilities (ME1-MEn) are connected to the same antenna (AT), use it jointly or
individual or all measurement facilities (ME1-MEn) are in each case connected to an individually assigned antenna (AT1-ATn) and use the antenna signals of the in each case individually assigned antenna.

10. Measurement arrangement (10) according to one of the preceding claims
**characterised in that**
- the measurement arrangement (10) has a computing facility (111) and a memory (112) in which software (SW) is stored, which when executed by the computing facility (111) defines the mode of operation of the computing facility (111) and
- the evaluation facility (AUS) and the measurement facilities (ME1-MEn) are formed by software program modules of the software (SW).

11. Vehicle, in particular rail vehicle (100),
**characterised in that**
the vehicle is fitted with a measurement arrangement (10) according to one of the preceding claims.

12. Vehicle according to claim 11,
**characterised in that**
the vehicle has a vehicle control device (110), which, when the error signal (F) is present, checks whether the speed of the vehicle has to be reduced or the vehicle has to be stopped.

13. Vehicle according to claim 11 or 12,
**characterised in that**
the vehicle has a vehicle control device (110), which, when the error signal (F) is present, reduces the speed of the vehicle or stops the vehicle.

14. Method for generating a first measured value (M1), which indicates a location or a speed, and a measured value-based first accuracy value (G1) indicating the accuracy of the first measured value (M1), with the aid of a first satellite-based measurement facility (ME1), which works on the basis of signals (SS1) of a first global satellite positioning system, wherein
- at least with a second measurement facility (ME2), a second measured value (M2), which likewise indicates the location or the speed, and
- a second measured value-based accuracy value (G2), which indicates the accuracy of the second measured value (M2), are generated and
- a plausibility check is carried out and an error signal (F) is generated if the plausibility check delivers an implausible result and is regarded as failed,
**characterised in that**
- the at least one second measurement facility (ME2) is satellite-based and works on the basis of signals of a second, different global satellite positioning system,
- the distance between the measurement facilities (ME1-MEn) is taken into account when calculating the deviation values (A) **in that** the deviation values (A) are corrected by taking into account the distances.

## Revendications

1. Agencement (10) de mesure comprenant un premier dispositif (ME1) de mesure reposant sur un satellite, qui travaille sur la base de signaux (SS1) d'un premier système global de repérage par satellite, pour la production
- d'une première valeur (M1) de mesure, qui indique un emplacement ou une vitesse du premier dispositif (ME1) de mesure, et
- d'une première valeur (G1) de précision se rapportant à une valeur de mesure indiquant la précision de la première valeur (M1) de mesure,
dans lequel
- il y a au moins un deuxième dispositif (ME2) de mesure, qui sert à la production
- d'une deuxième valeur (M2) de mesure, qui indique l'emplacement ou la vitesse du deuxième dispositif (ME2) de mesure, et
- une deuxième valeur (G2) de précision se rapportant à une valeur de mesure, qui indique la précision de la deuxième valeur (M2) de mesure, et
- le premier et le deuxième dispositifs (ME1-ME2) de mesure reposant sur un satellite sont reliés à un dispositif (AUS) d'évaluation, qui, en tirant parti des valeurs (M1-Mn) de mesure et/ou des valeurs (G1-Gn) de précision rapportées à une valeur de mesure des dispositifs (ME1-MEn) de mesure, effectue un contrôle de vraisemblance et produit un signal (F) d'erreur, si le contrôle de vraisemblance donne un résultat invraisemblable et est considéré comme ayant échoué, **caractérisé en ce que**
- le au moins un deuxième dispositif (ME2) de mesure repose sur un satellite et travaille sur la base de signaux (SS2) d'un deuxième système global de repérage par satellite,
- on prend en compte la distance entre les dispositifs (ME1-MEn) de mesure, lors du calcul des valeurs (A) d'écart en corrigeant les valeurs (A) d'écart en tenant compte des distances.

2. Agencement (10) de mesure suivant la revendication 1, **caractérisé en ce que**
le dispositif (AUS) d'évaluation est constitué, pour
- former une valeur (A) d'écart, qui quantifie l'écart entre les valeurs (M1-Mn) de mesure entre elles ou l'écart d'une valeur (Msys) estimée, qui a été estimée sur la base d'au moins l'une des valeurs de mesure,
- former une valeur (Ga) de précision indiquant la précision de la valeur (A) d'écart, dénommée dans ce qui suit valeur (Ga) de précision rapportée à une valeur d'écart, et
- produire le signal (F) d'erreur en tirant parti de la valeur (A) d'écart et de la valeur (Ga) de précision rapportée à une valeur d'écart.

3. Agencement (10) de mesure suivant la revendication 2, **caractérisé en ce que**
le dispositif (AUS) d'évaluation considère que le contrôle de vraisemblance a échoué et produit le signal (F) d'erreur, si la valeur absolue du quotient entre la valeur (A) d'écart et la valeur (Ga) de précision rapportée à une valeur d'écart atteint ou dépasse une valeur (S) limite rapportée à une valeur d'écart.

4. Agencement (10) de mesure suivant l'une des revendications précédentes,
**caractérisé en ce que**
le dispositif (AUS) d'évaluation considère que le contrôle de vraisemblance a échoué et produit le signal (F) d'erreur, si la première valeur (G1) de précision rapportée à une valeur de mesure atteint ou dépasse une première valeur (G1s) limite rapportée à une valeur de mesure, la deuxième valeur (G2) de précision rapportée à une valeur de mesure atteint ou dépasse une deuxième valeur (G2s) limite rapportée à une valeur de mesure ou les deux valeurs (G1-G2) de précision rapportées à une valeur de mesure atteignent ou dépassent leurs valeurs limites respectives rapportées à une valeur de mesure.

5. Agencement (10) de mesure suivant l'une des revendications précédentes,
**caractérisé en ce qu'**
il y a un ou plusieurs autres dispositifs (ME3-MEn) de mesure, qui servent chacun à produire
- une autre valeur (M3-Mn) de mesure, qui indique l'emplacement ou respectivement la vitesse du dispositif (ME3-MEn) respectif de mesure, et
- une autre valeur (G3-Gn) de précision rapportée à une valeur de mesure, qui indique la précision de l'autre valeur (M3-Mn) de mesure.

6. Agencement (10) suivant la revendication 5,
**caractérisé en ce que**
- le dispositif (AUS) d'évaluation est constitué pour former, par paire de dispositifs (MEi, MEj) de mesure respectivement une valeur (Aij) d'écart individuelle à une paire, qui quantifie l'écart entre les valeurs (Mi, Mj) de mesure des dispositifs (MEi, MEj) de mesure de la paire respective,
- le dispositif (AUS) d'évaluation est constitué pour former, par paire de dispositifs (MEi, MEj) de mesure, une valeur (Gaij) de précision individuelle à une paire indiquant la précision de la valeur (Aij) d'écart individuelle à une paire, et
- le dispositif (AUS) d'évaluation est constitué, pour produire le signal (F) d'erreur en tirant parti des valeurs (Aij) d'écart individuelles à une paire et des valeurs (Gaij) de précision individuelles à une paire.

7. Agencement (10) suivant la revendication 6,
**caractérisé en ce que**
le dispositif (AUS) d'évaluation considère le contrôle de vraisemblance comme ayant échoué et produit le signal (F) d'erreur, si pour au moins une paire, la valeur absolue du quotient entre la valeur (Aij) d'écart individuelle à une paire et la valeur (Gaij) de précision individuelle à une paire atteint ou dépasse une valeur (Sij) limite rapportée à une valeur d'écart ou une valeur limite rapportée à une valeur d'écart tous systèmes confondus.

8. Agencement (10) suivant l'une des revendications 5 à 7 précédentes,
**caractérisé en ce que**
le dispositif (AUS) d'évaluation est constitué pour
- former une valeur (Ai) d'écart, qui quantifie l'écart des valeurs de mesure des dispositifs (ME1-MEn) de mesure à une valeur (Msys) de mesure estimée, qui a été estimée sur la base des valeurs de mesure des dispositifs (ME1-MEn) de mesure de l'agencement (10) de mesure,
- former une valeur (Gai) de précision indiquant la précision de la valeur (Ai) d'écart, dénommée dans ce qui suit valeur (Gai) de précision rapportée à une valeur d'écart, et
- produire le signal (F) d'erreur en tirant parti de la valeur (Ai) d'écart et de la valeur (Gai) de précision rapportée à une valeur d'écart.

9. Agencement (10) suivant l'une des revendications précédentes,
**caractérisé en ce que**
les dispositifs (ME1-MEn) de mesure sont reliés à la même antenne (AT) et utilisent celle-ci conjointement, ou
des individuels ou tous les dispositifs (ME1-MEn) de mesure sont reliés chacun à une antenne (AT1-ATn) affectée individuellement et les signaux d'antenne utilisent les antennes respectives affectées individuellement.

10. Agencement (10) suivant l'une des revendications précédentes,
**caractérisé en ce que**
- l'agencement (10) de mesure comporte un dispositif (111) informatique et une mémoire (112), dans laquelle est mis en mémoire du logiciel (SW), qui, lors de l'exécution par le dispositif (111) informatique, établit le mode de travail du dispositif (111) informatique, et
- le dispositif (AUS) d'évaluation et les dispositifs (ME1-MEn) de mesure sont formés par des modules de programme logiciel des logiciels (SW).

11. Véhicule, en particulier véhicule (100) ferroviaire, **caractérisé en ce que**
le véhicule est équipé d'un agencement (10) de mesure suivant l'une des revendications précédentes.

12. Véhicule suivant la revendication 11,
**caractérisé en ce que**
le véhicule a un appareil (110) de commande de véhicule, qui en présence du signal (F) d'erreur, contrôle si la vitesse du véhicule doit être réduite ou si le véhicule doit être mis à l'arrêt.

13. Véhicule suivant la revendication 11 ou 12,
**caractérisé en ce que**
le véhicule a un appareil (110) de commande de véhicule, qui en présence du signal (F) d'erreur, réduit la vitesse du véhicule ou arrête le véhicule.

14. Procédé de production d'une première valeur (M1) de mesure, qui indique un emplacement ou une vitesse, et d'une première valeur (G1) de précision rapportée à une valeur de mesure indiquant la précision de la première valeur (M1) de mesure, à l'aide d'un premier dispositif (ME1) de mesure reposant sur un satellite, qui travaille sur la base de signaux (SS1) d'un premier système global de repérage par satellite,
dans lequel on produit
- au moins par un deuxième dispositif (ME2) de mesure une deuxième valeur (M2) de mesure, qui indique également l'emplacement ou respectivement la vitesse, et
- une deuxième valeur (G2) de précision rapportée à une valeur de mesure, qui indique la précision de la deuxième valeur (M2) de mesure, et
- on effectue un contrôle de vraisemblance et on produit un signal (F) d'erreur, si le contrôle de vraisemblance donne un résultat invraisemblable et est considéré comme ayant échoué,
**caractérisé en ce que**
- le au moins un deuxième dispositif (ME2) de mesure repose sur un satellite et travaille sur la base de signaux (SS2) d'un deuxième système global de repérage par satellite,
- on prend en compte la distance entre les dispositifs (ME1-MEn) de mesure, lors du calcul des valeurs (A) d'écart en corrigeant les valeurs (A) d'écart en tenant compte des distances.
